# EUROPEAN PATENT SPECIFICATION

(11) **EP 0 399 458 B1**
(45) Date of publication and mention of the grant of the patent: **30.03.1994**
(21) Application number: 90109686.7
(22) Date of filing: 22.05.1990
(51) Int. Cl.: C09B 35/08, C09B 67/22, C09D 11/02

(54) **Diarylide/disazo pyrazolone pigment compositions**
Diarylid-/Disazopyrazolon-Pigmentzusammensetzungen
Compositions de pigments du type diarylide/disazopyrazolone

(30) Priority: 23.05.1989 US 356045; 23.05.1989 US 356040
(43) Date of publication of application: 28.11.1990
(73) Proprietor: SUN CHEMICAL CORPORATION, Fort Lee New Jersey 07026 (US)
(72) Inventor: Schwartz, Russell J, Cincinnati Ohio 45229 (US); Gregorio, Manuel Z, Cincinnati Ohio 45240 (US); Zwirgzdas, Anthony C, Fairfield Ohio 45014 (US)
(74) Representative: VOSSIUS & PARTNER

(56) References cited:
- DE-A- 2 204 769
- US-A- 3 776 749

## Description

The present invention relates to improved diarylide and disazo pyrazolone pigments.

Diarylide and disazo pyrazolone pigments represent important types of general purpose colorants.

These types of pigments are well known in the prior art and are extensively used as colorants for solvent and water-based inks, coatings, paints and plastics. For example, US-A-4 643 770 and US-A-4 468 255 disclose yellow and orange diarylide pigments wherein the methine moiety is substituted by longer alkyl groups. However, the diarylide and disazo pyrazolone pigments of the present invention exhibit higher coloring strength, clearer shades, lower rheology and enhanced gloss compared with prior art pigments.

The improved pigment compositions of the present invention are obtained by incorporating novel azomethine compounds in the pigment. These azomethines may be represented by the formula: 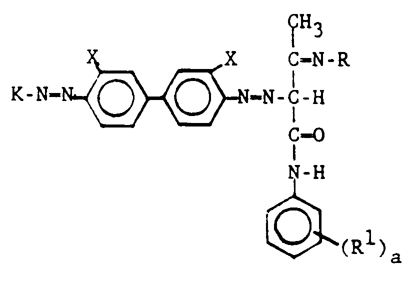
wherein:
- R: is an alkylene oxide polymer;
- R¹: is independently selected from CH₃, OCH₃, OCH₂CH₃ and Cl;
- a: is an integer of 0 to 5;
- X: is Cl or CH₃ and
- K: is:

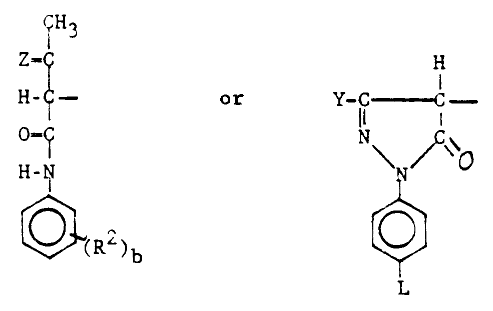

wherein:
- R²: is independently selected from CH₃, OCH₃, OCH₂CH₃ and Cl;
- b: is an integer of 0 to 5;
- Z: is O or N-R;
- Y: is CH₃ or COOC₂H₅; and
- L: is CH₃ or H.

Preferably the alkylene oxide polymer (or oligomer) has a number average molecular weight of from about 500 to about 20,000 and the alkylene moiety contains 2 to 8 carbon atoms. Especially preferred are those in which the polymer has a number average molecular weight of 1,000 to 5,000. The preferred choice of the alkylene oxide polymer is ethylene oxide polymer, propylene oxide polymer and a copolymer of ethylene oxide and propylene oxide, such as those copolymers having the formula: 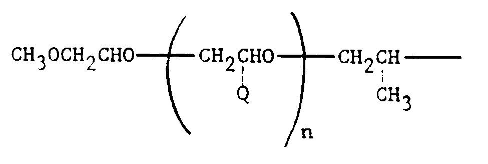
wherein:
- n: is an integer of about 4 to about 200, preferably 4 to 60; and Q is H or CH₃.

The azomethine will typically be present in the pigment composition in an amount of not more than about 50 wt. %, preferably 5 to 30 wt. %, based on the weight of the composition (i.e. pigment plus azomethine). In the case of a diarylide pigment, the azomethine is one wherein the moiety "K" has the value: 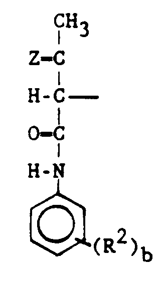
In the case of a disazo pyrazolone pigment, the azomethine is one wherein the moiety "K" has the value: 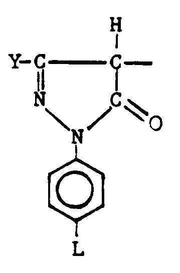
Typical diarylide pigments have the following general formula: 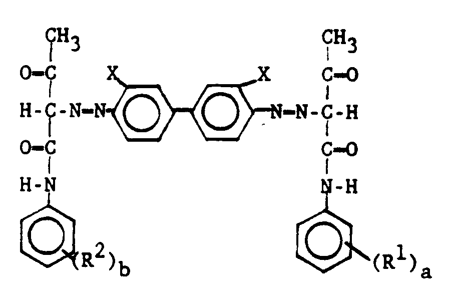
wherein X, R¹, R², a and b have the values as set forth above.

Typical disazo pyrazolone pigments have the following general formula: 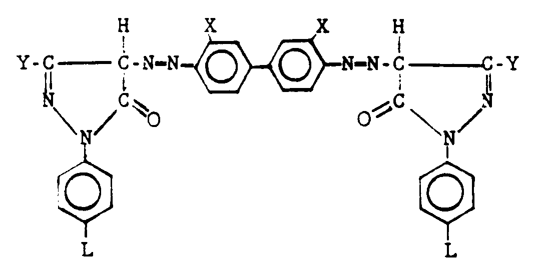
wherein X, Y and L have the values as set forth above.

Preferably, the diarylide pigment is one such as Pigment Yellow 12, Pigment Yellow 13, Pigment Yellow 14, Pigment Yellow 17, Pigment Yellow 83, Pigment Yellow 114, Pigment Yellow 126, Pigment Yellow 127, Pigment Yellow 176 and Pigment Orange 16. The disazo pyrazolone pigment is preferably one such as Pigment Orange 13, Pigment Orange 34, Pigment Red 37, Pigment Red 38, Pigment Red 41 and Pigment Red 42.

Printing inks are readily prepared from the pigment compositions of this invention by incorporating the desired aqueous and/or non-aqueous vehicle in the pigment plus azomethine in the usual manner. The typical surfactants, waxes, resins, extenders, etc. may also be incorporated as desired.

The novel azomethines of the present invention may be synthesized and subsequently added to the desired diarylide or disazo pyrazolone pigment. If this method is employed, the azomethine should be added as the pigment is being prepared. However, the preferable approach is one which involves the following steps:
(a) formation of an azomethine coupling agent by reacting a primary amine-terminated alkylene oxide polymer and an acetanilide;
(b) formation of a tetrazonium salt by reaction of the desired diazo component with sodium nitrite and hydrochloric acid;
(c) reaction of the tetrazonium salt with the desired coupler in the presence of the azomethine coupling agent so as to produce the azomethine together with the pigment.

The following reactions generally illustrate the reaction scheme involved in steps (a) - (c): 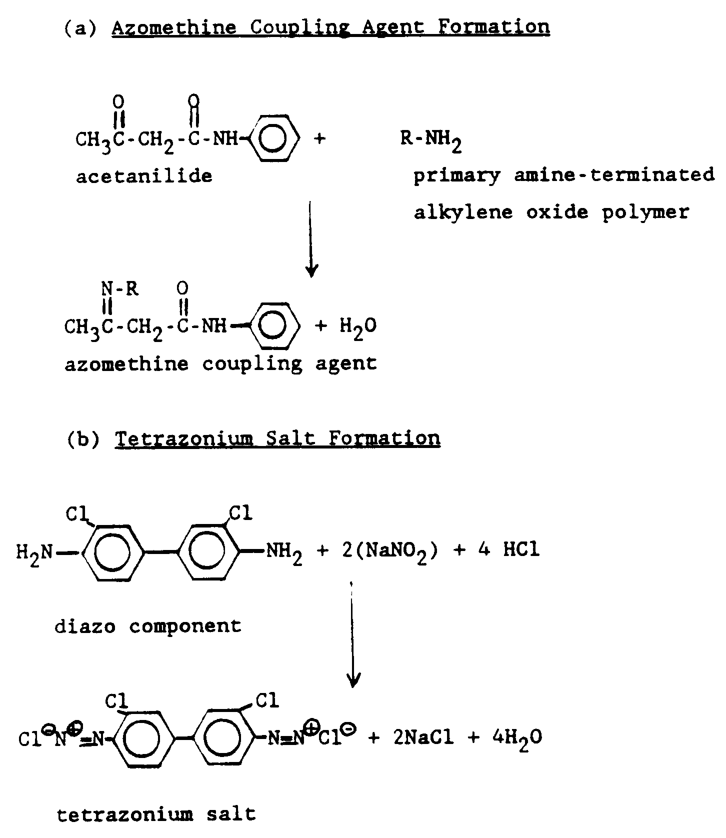 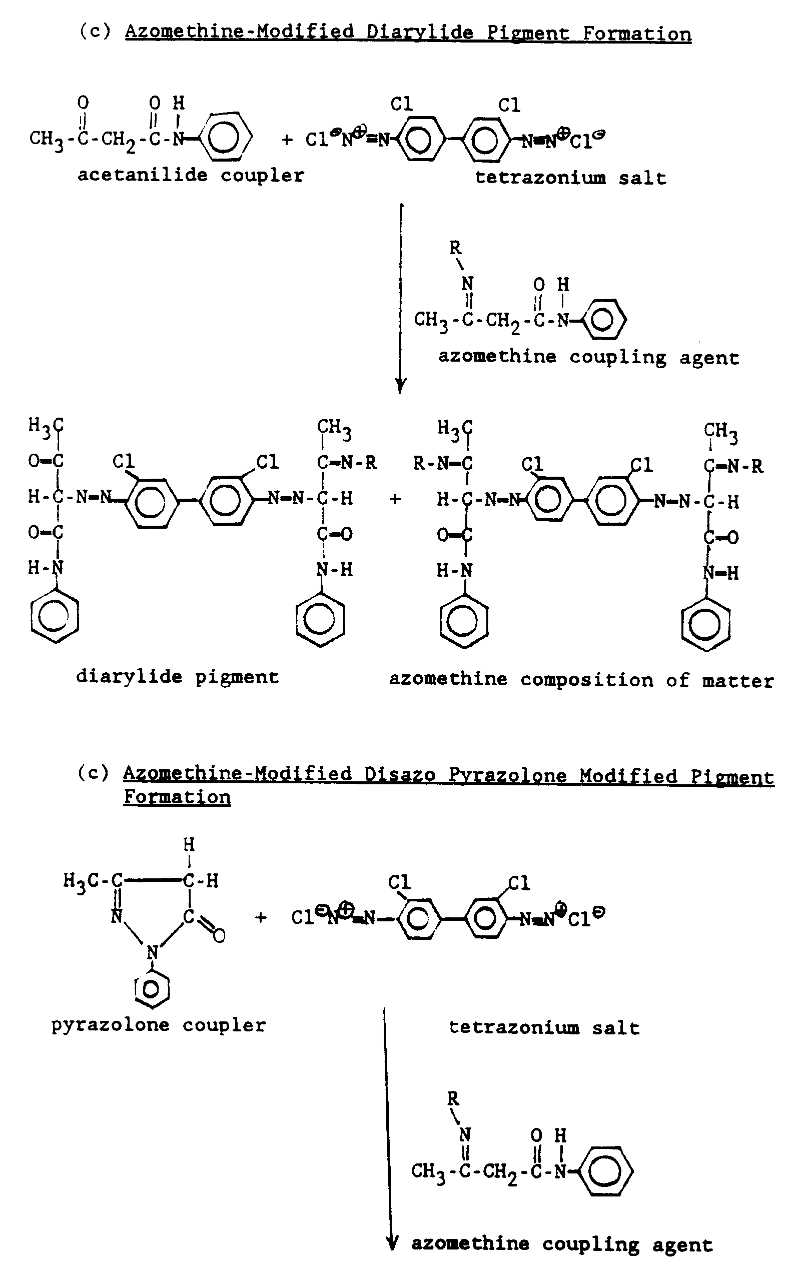 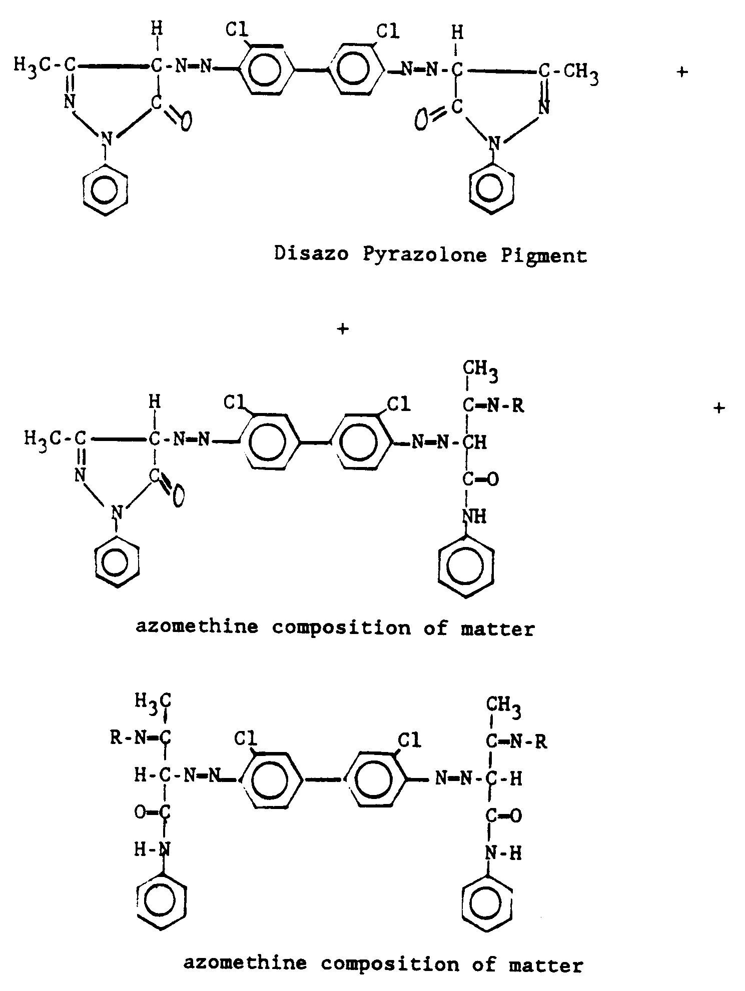
In the case of diarylide pigments, the tetrazonium salt is usually formed from 3,3′-dichlorobenzidine or dianisidine and the coupler is usually acetoacetanilide, substituted acetoacetanilides or mixtures of various acetoacetanilides. In a similar vein, for disazo pyrazolone pigments, the same type of tetrazonium salt is employed in conjunction with a pyrazolone, substituted pyrazolone or mixtures of various pyrazolones. The azomethine coupler is typically derived from an acetoacetanilide, such as acetoacetanilide, acetoacet-2,4-xylide, acetoacet-o-toluidide, acetoacet-o-anisidide or acetoacet-2,5-dimethoxy-4-chloranilide.

The following examples illustrate the preparation of the novel azomethines and the azomethine-modified diarylide and disazo pyrazolone pigment compositions of the present invention.

### Example 1

Tetrazotized 3,3′-dichlorobenzidine (DCB) was prepared by charging 21.7 parts of 3,3′-dichlorobenzidine to 39.8 parts of 20° Be HCl and 140 parts of an ice/water mixture with constant stirring to form a homogenous suspension. To this was then added 32.6 parts of 38% sodium nitrite and stirring continued for 1 hour at a temperature of 0 - 5°C. The excess nitrous acid was then destroyed by the addition of approximately 0.5 parts sulfamic acid.

A fine suspension of acetoacetanilide (AAA) was prepared by charging 31.7 parts AAA to 400 parts H₂O and 33.6 parts of 50% aqueous NaOH, and the mixture was stirred until all of the AAA was dissolved. The temperature of the solution was adjusted to 0 - 5°C. with the addition of ice and subsequently the AAA was precipitated by the slow addition of 38.5 parts of 70% acetic acid.

An azomethine coupling component was formed by charging 1.2 parts of AAA to 13.5 parts of a primary amine-terminated polymer comprised of 70% ethylene oxide and 30% propylene oxide and having a number average molecular weight of 2000 ("Jeffamine M-2070," Texaco Chemical Corp.) and heating the mixture to 100 - 105°C. with stirring. After 1 hour, the reaction was complete as evidenced by the disappearance of the ketone absorption band in the SR spectrum (approximately 1673 cm¹). The resulting azomethine was added to the suspension of AAA immediately prior to coupling with the tetrazotized DCB.

Coupling was then carried out by adding the tetrazotized DCB to the AAA suspension over a period of 1 hour. Stirring was continued until no excess tetrazo remained, and then the slurry was heated to 90 - 95°C., stirred 15 minutes, filtered, washed and dried in an oven at 60°C.

Evaluation was performed by charging 15 parts of the pigment to 75 parts of a water-based ink vehicle containing a commercial grade acrylic resin ("Joncryl 67", S.C. Johnson) and 300 parts of 1/8th inch stainless steel balls. The mixture was placed on a "Red Devil" paint shaker for 30 minutes, to produce a mill base. The viscosity of the mill base was approximately one-half of that of a conventional Pigment Yellow 12 mill base. Water flexo inks were prepared by letting back the mill bases with additional vehicle to a pigment content of 9.0%. The pigment produced an ink that was approximately 20% stronger, glossier and more transparent than those prepared from the conventional Pigment Yellow 12.

### Example 2

Example 1 was repeated except that 32.7 parts of acetoacet-o-toluidide (AAOT) was used in place of the AAA. The resulting Pigment Yellow 14 when evaluated as in Example 1, gave similar results versus a conventional Pigment Yellow 14.

### Example 3

The procedure of Example 1 was followed except the suspension of precipitated AAA and the azomethine coupler were added to the solution of tetrazo. Results were similar to those of Example 1.

### Example 4

The procedure of Example 2 was followed except the product was converted to a 50% solids presscake, and evaluated by utilizing a shot mill in place of the paint shaker, to disperse the pigment. The resulting ink showed increased gloss, strength, and transparency compared with a conventional Pigment Yellow 14.

### Example 5

Tetrazotized DCB, a fine suspension of AAA and an azomethine coupling component were obtained by the procedure of Example 1. Coupling was then carried out by simultaneously and separately adding the tetrazotized DCB and azomethine coupling component to the AAA suspension over a period of 1 hour. Stirring was continued until no excess tetrazo remained, and the slurry was then heated to 90 - 95°C., stirred for 15 minutes, filtered, washed and dried in an oven at 60°C.

Evaluation was performed by charging 25 parts of the pigment preparation to 75 parts of a publication gravure ink vehicle containing Zn/Ca resinate, toluene, and lecithin, and 150 parts of 1/8th inch stainless steel balls. The mixture was placed on a "Red Devil" paint shaker for 30 minutes to produce a mill base. A finished ink was obtained by diluting the mill base with additional vehicle to a standard viscosity (30 seconds through a #1 Zahn Cup). The pigment preparation produced an ink that was 30% stronger, glossier, and more transparent than an untreated pigment. The pigment preparation was lower in mill base viscosity and greener in color evaluation versus conventional amine treated Yellow 12.

### Example 6

The procedure of Example 1 was followed except using 20.9 parts of o-dianisidine in place of the 21.7 parts of 3-3′-dichlorobenzidine to afford 62.2 parts of Pigment Orange 16.

Evaluation was performed in a C-Type packaging gravure ink by charging 25 parts of pigment to 75 parts of a RS-nitrocellulose based grind vehicle with 300 parts of 1/8th inch stainless steel balls. The mixture was place don a "Red Devil" paint shaker for 30 minutes to afford a mill base, which was then further letdown with 180 parts of a typical maleic resin solution containing toluene and isopropyl alcohol. The ink was then adjusted to print viscosity (22 seconds through a #2 Zahn cup) by the addition of isopropyl acetate. Compared with an ink made from conventionally prepared Orange 16, the ink of this invention was 30% stronger, glossier, more transparent, and lower in rheology. To demonstrate the versatility of the invention, these pigments were also evaluated in a water-based flexographic ink according to the method in Example 1. The Orange 16 of this invention was again stronger, glossier and more transparent than the untreated Orange 16.

### Example 7

The procedure of Example 1 was followed except using 46.5 parts of acetoacet-2,5-dimethoxy-4-chloro aniline in place of the 31.7 parts of acetoacetanilide, to afford 82.1 parts of Pigment Yellow 83. The resulting material was evaluated as in Example 6, versus an untreated Yellow 83; the former was considerably stronger, glossier and more transparent in both the solvent-based and water-based inks.

### Example 8

The procedure of Example 1 was followed except using 15.8 parts of acetoacetanilide and 17.0 parts of acetoacet-p-toluidide in place of the 31.7 parts of acetoacetanilide to afford 64.5 grams of Pigment Yellow 114. Versus an untreated sample of Pigment Yellow 114, the pigment preparation of the example showed enhanced gloss, strength, transparency and rheology in both water-based and solvent-based flexographic inks.

As can be seen by the above Examples 1 - 8, the modified diarylide pigments achieved significantly improved properties. Specifically, the modified diarylide pigments are characterized by a lower viscosity, in addition to improved strength, gloss and transparency.

The modified diarylide pigments may be used in all applications where diarylide pigments are utilized. They are especially useful in water-based flexographic inks, water-based gravure inks, water-based news inks and any water-based coatings where diarylide pigments are utilized. They are also useful in solvent-based inks, including solvent-flexographic inks, publication gravure inks, various solvent packaging inks, and solvent-based coatings where diarylide pigments are utilized.

### Example 9

Tetrazotized 3,3′ dichlorobenzidine (DCB) was prepared by charging 17.5 parts of DCB to 100 parts of an ice/water mixture and 32.1 parts of 20° Be HCl, with constant stirring, to form a homogenous suspension. To this was then added 35.7 parts of a 28% aqueous solution of sodium nitrite and stirring continued for 1 hour at a temperature of 0 - 5°C. After one hour, excess nitrous acid was destroyed with the addition of approximately 0.5 parts of sulfamic acid.

A fine suspension of 1-phenyl-3-methyl-5-pyrazolone (PMP) was prepared by charging 25.2 parts of PMP to 400 parts of H₂O and 13.1 parts of 50% aqueous sodium hydroxide, and the mixture was stirred until all the PMP was dissolved. The PMP was then precipitated by the slow addition of 15 parts of 70% acetic acid.

An azomethine coupling component (1) was formed by charging 0.7 parts of acetoacetanilide (AAA) to 7.9 parts of the same amine-terminated polymer as employed in Example 1, and heating the mixture to 100 - 105°C. while stirring. After one hour, the reaction was complete as evidenced by the disappearance of the ketone absorption band in the IR spectrum at 1673 cm⁻¹.

Formation of the Orange 13 pigment composition of the invention was then achieved by the simultaneous addition of the tetrazotized DCB and the azomethine compound (I) to the PMP suspension over a period of 70 minutes. Stirring was continued until no excess tetrazotized DCB remained, and then the slurry was heated to 90 - 95°C., stirred an additional 15 minutes, filtered, washed, and dried in an oven at 60°C., to give 51.0 parts of an Orange 13 pigment composition.

Evaluation was performed by charging 25 parts of the pigment to 75 parts of a water-based ink vehicle containing a commercial grade acrylic resin ("Joncryl 67", S.C. Johnson) and 300 parts of1/8th inch stainless steel balls. The mixture was placed on a "Red Devil" paint shaker for 30 minutes, to produce a mill base. The viscosity of the mill base was approximately one-half of that of a conventional Pigment Orange 13 mill base. Water flexo inks were prepared by letting back the mill bases with additional vehicle to a pigment content of 9.0%. The pigment produced an ink that was approximately 30% stronger, glossier and more transparent than those prepared from the conventional Pigment Orange 13.

To demonstrate the versatility of the invention, evaluation was also performed in a C-type packaging gravure ink by charging 25 parts of pigment to 75 parts of a RS-nitrocellulose-based grind vehicle with 300 parts of 1/8th inch stainless steel balls. The mixture was placed on a "Red Devil" paint shaker for 30 minutes to afford a mill base, which was then further letdown with 180 parts of a typical maleic resin solution containing toluene and isopropyl alcohol. The ink was then adjusted to print viscosity (22 seconds through a #2 Zahn cup) by the addition of isopropyl acetate. Compared with an ink made from conventionally prepared Orange 13, the ink of this invention was 30% stronger, glossier, more transparent, and lower in rheology.

### Example 10

The procedure of Example 9 was repeated except using 26.5 parts of 1-(p-tolyl)-3-methyl-5-pyrazolone in place of the 25.2 parts of 1-phenyl-3-methyl-5-pyrazolone, to afford 53.0 parts of an Orange 34 pigment composition.

Evaluation of this pigment composition in both the water flexo and C-type packaging gravure ink systems of Example 9 gave similar improvements over a conventional Orange 34 made without the azomethines of this invention.

### Example 11

Tetrazotized o-dianisidine (ODA) was prepared by charging 19.5 parts of ODA to 100 parts of an ice/water mixture and 37.1 parts of 20° Be HCl, with constant stirring to form a homogenous suspension. To this was added 12.1 parts of sodium nitrite and stirring was continued for 90 minutes at a temperature of 0 - 5°C. Remaining nitrous acid was eliminated with the addition of approximately 0.5 parts of sulfamic acid.

A fine suspension of 1-(p-tolyl)-3-methyl-5-pyrazolone (PTMP) was prepared according to the procedure of Example 1 using 30.8 parts of PTMP, 600 parts of water, 15.0 parts of 50% aqueous sodium hydroxide, and 17.0 parts of 70% acetic acid.

Formation of an improved pigment Red 37 was then achieved by the simultaneous addition of the tetrazotized ODA and 9.4 parts of azomethine compound (I) to the PTMP suspension over a period of 70 minutes, while maintaining a ph of 5.2 - 5.6 by the addition of dilute aqueous sodium hydroxide. Stirring was continued until no excess tetrazotized ODA remained, and then the slurry was heated to 90 - 95°C., stirred an additional five minutes, cooled to 70°C., filtered, washed with water, and dried in an oven at 60°C. to give 61 parts of a Pigment Red 37 composition.

Evaluation of this pigment composition in both the water flexo and C-type packaging gravure ink systems of Example 9 gave similar improvements over a Pigment Red 37 prepared without the azomethine compound of this invention.

### Example 12

The procedure of Example 11 was repeated except using 28.4 parts of 1-phenyl-3-methyl-5-pyrazolone (PMP) in place of the 1-(p-tolyl)3-methyl-5-pyrazolone (PTMP) to afford 58.0 parts of a similarly improved Pigment Red 41.

### Example 13

The procedure of Example 9 was repeated except using an azomethine coupling component made from .7 parts acetoacetanilide and 7.9 parts of a primary amine-terminated polymer comprised of 95% propylene oxide and 5% ethylene oxide and having a number average molecular weight of 2000 ("Jeffamine M 2005," Texaco Chemical Corporation), to give 51.0 parts of an Orange 13 pigment composition having increased gloss and transparency in C-type gravure packaging ink, compared with the Orange 13 of Example 9.

### Example 14

The procedure of Example 13 was repeated except that 12.0 parts of Rosin were added to the pigment slurry at 90 - 95°C., prior to filtration. The resulting Pigment Orange 13 composition showed greatly enhanced strength and dispersability for the coloration of polyvinyl-chloride (PVC). Trademarks are recognized as such.

## Claims

1. An azomethine compound having the formula: 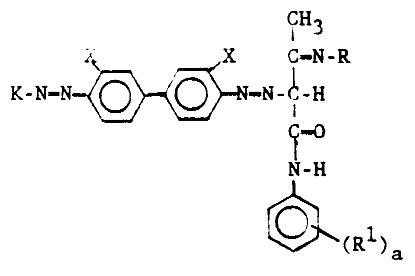 wherein:
R is an alkylene oxide polymer;
R¹ is independently selected from CH₃, OCH₃, OCH₂CH₃ and Cl;
a is an integer of 0 to 5;
X is Cl or CH₃ and
K is: 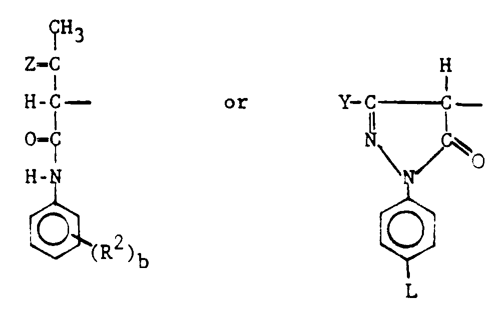
wherein:
R² is independently selected from CH₃, OCH₃, OCH₂CH₃ and Cl;
b is an integer of 0 to 5;
Z is O or N-R;
Y is CH₃ or COOC₂H₅; and
L is CH₃ or H.

2. The azomethine compound of claim 1, wherein the alkylene oxide polymer has a number average molecular weight of from about 500 to about 20,000 and the alkylene moiety contains 2 to 8 carbon atoms.

3. The azomethine compound of claim 2, wherein the polymer has a number average molecular weight of 1,000 to 5,000.

4. The azomethine compound of claim 2, wherein the alkylene oxide polymer is an ethylene oxide polymer.

5. The azomethine compound of claim 2, wherein the alkylene oxide polymer is a propylene oxide polymer.

6. The azomethine compound of claim 2, wherein the alkylene oxide polymer is a copolymer of ethylene oxide and propylene oxide.

7. The azomethine compound of claim 6, wherein the copolymer has the formula: 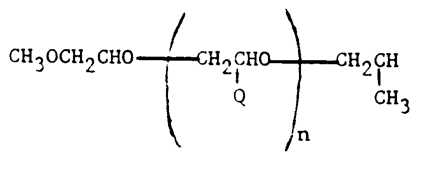 wherein:
n is an integer of about 4 to about 200, and Q is H or CH₃.

8. The azomethine compound of claim 7, wherein n is 4 to 60.

9. A pigment composition comprising an azomethine compound of any one of claims 1 to 8 and at least one pigment.

10. The pigment composition of claim 9, wherein the azomethine is present in an amount of not more than about 50 wt. %.

11. The pigment composition of claim 10 wherein the azomethine is present in an amount of 5 to 30 wt. %.

12. A pigment composition comprising at least one diarylide pigment and an azomethine compound of any one of claims 1 to 8 wherein K is:

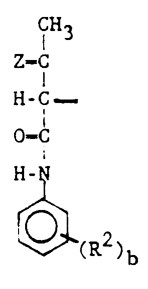

13. The pigment composition of claim 12 wherein the diarylide pigment is selected from Pigment Yellow 12, Pigment Yellow 13, Pigment Yellow 14, Pigment Yellow 17, Pigment Yellow 83, Pigment Yellow 114, Pigment Yellow 126, Pigment Yellow 127, Pigment Yellow 176 and Pigment Orange 16.

14. A printing ink composition comprising the pigment composition of claim 12 and a vehicle.

15. A pigment composition comprising at least one disazopyrazolone pigment, and an azomethine compound of any one of claims 1 to 8 wherein K is:

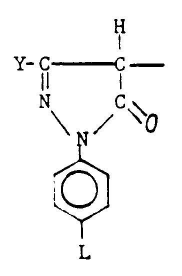

16. The pigment composition of claim 15, wherein the disazopyrazolone pigment is selected from Pigment Orange 13, Pigment Orange 34, Pigment Red 37, Pigment Red 38, Pigment Red 41 and Pigment Red 42.

17. A printing ink composition comprising the pigment composition of claim 15 and a vehicle.

## Patentansprüche

1. Azomethinverbindung der Formel: 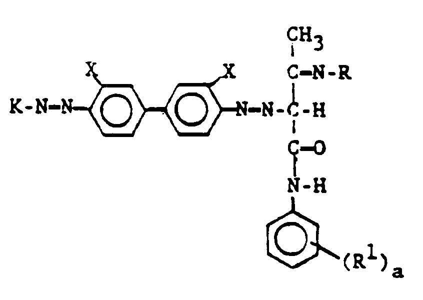 in der R ein Alkylenoxidpolymer darstellt;
R¹ unabhängig aus CH₃-, OCH₃-, OCH₂CH₃-Gruppen und Cl-Atomen gewählt ist;
a eine ganze Zahl von 0 bis 5 darstellt;
X ein Chloratom oder eine Methylgruppe ist und K 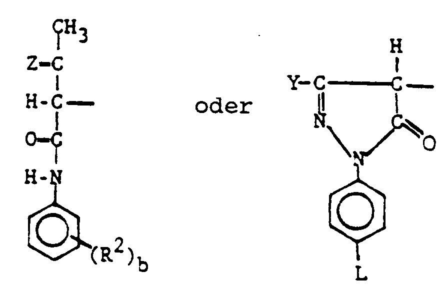 ist, wobei R² unabhängig aus CH₃-, OCH₃-, OCH₂CH₃-Gruppen und Cl-Atomen gewählt ist;
b eine ganze Zahl von 0 bis 5 ist;
Z ein Sauerstoffatom oder N-R ist;
Y eine CH₃- oder COOC₂H₅-Gruppe ist; und
L eine Methylgruppe oder ein Wasserstoffatom ist.

2. Azomethinverbindung nach Anspruch 1, in der das Alkylenoxidpolymer ein Molekulargewichtzahlenmittel von etwa 500 bis etwa 20000 aufweist und die Alkyleneinheit 2 bis 8 Kohlenstoffatome enthält.

3. Azomethinverbindung nach Anspruch 2, in der das Polymer ein Molekulargewichtzahlenmittel von 1000 bis 5000 aufweist.

4. Azomethinverbindung nach Anspruch 2, in der das Alkylenoxidpolymer ein Ethylenoxidpolymer ist.

5. Azomethinverbindung nach Anspruch 2, in der das Alkylenoxidpolymer ein Propylenoxidpolymer ist.

6. Azomethinverbindung nach Anspruch 2, in der das Alkylenoxidpolymer ein Copolymer aus Ethylenoxid und Propylenoxid ist.

7. Azomethinverbindung nach Anspruch 6, in der das Copolymer die Formel: 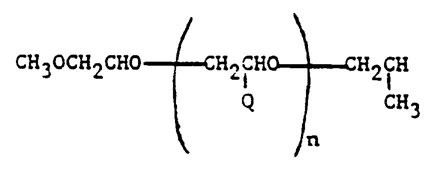 aufweist, in der n eine ganze Zahl von etwa 4 bis etwa 200 ist, und Q ein Wasserstoffatom oder eine Methylgruppe ist.

8. Azomethinverbindung nach Anspruch 7, in der n 4 bis 60 ist.

9. Pigmentzusammensetzung, umfassend eine Azomethinverbindung nach einem der Ansprüche 1 bis 8 und mindestens ein Pigment.

10. Pigmentzusammensetzung nach Anspruch 9, in der das Azomethin in einer Menge von nicht mehr als etwa 50 Gew.-% vorhanden ist.

11. Pigmentzusammensetzung nach Anspruch 10, in der das Azomethin in einer Menge von 5 bis 30 Gew.-% vorhanden ist.

12. Pigmentzusammensetzung, umfassend mindestens ein Diarylidpigment und eine Azomethinverbindung nach einem der Ansprüche 1 bis 8, in der K: 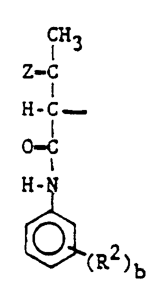 ist.

13. Pigmentzusammensetzung nach Anspruch 12, in der das Diarylidpigment ausgewählt aus Pigment Yellow 12, Pigment Yellow 13, Pigment Yellow 14, Pigment Yellow 17, Pigment Yellow 83, Pigment Yellow 114, Pigment Yellow 126, Pigment Yellow 127, Pigment Yellow 176 und Pigment Orange 16 ist.

14. Druckfarbenzusammensetzung, umfassend die Pigmentzusammensetzung von Anspruch 12 und einen Träger.

15. Pigmentzusammensetzung, umfassend mindestens ein Disazopyrazolonpigment und eine Azomethinverbindung nach einem der Ansprüche 1 bis 8, in der K: 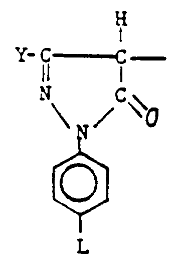 ist.

16. Pigmentzusammensetzung nach Anspruch 15, in der das Disazopyrazolonpigment ausgewählt aus Pigment Orange 13, Pigment Orange 34, Pigment Red 37, Pigment Red 38, Pigment Red 41 und Pigment Red 42 ist.

17. Druckfarbenzusammensetzung, umfassend die Pigmentzusammensetzung nach Anspruch 15 und einen Träger.

## Revendications

1. Compose d'azométhine répondant à la formule: 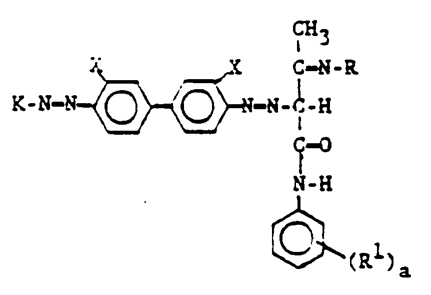 dans laquelle:
R est un polymère d'alkylènoxyde
R¹ est choisi indépendamment parmi CH₃, OCH₃, OCH₂CH₃ et Cl;
a est un nombre entier de 0 à 5;
X est Cl ou CH₃ et
K est: 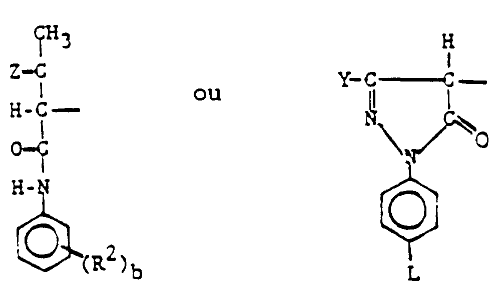 dans laquelle:
R² est choisi indépendamment parmi CH₃, OCH₃, OCH₂CH₃ et Cl;
b est un nombre entier de 0 à 5;
Z est O ou N-R;
Y est CH₃ ou COOC₂H₅; et
L est CH₃ ou H

2. Le composé d'azométhine selon la revendication 1 dans lequel le polymère d'alkylènoxyde présente un poids moléculaire moyen d'environ 500 à environ 20.000 et la fraction alkylène contient 2 à 8 atomes de carbone.

3. Le composé d'azométhine selon la revendication 2 dans lequel le polymère possède un poids moléculaire moyen de 1.000 à 5.000.

4. Le composé d'azométhine selon la revendication 2 dans lequel le polymère d'alkylènoxyde est un polymène d'éthylènoxyde.

5. Le composé d'azométhine selon la revendication 2, dans lequel le polymère d'alkylènoxyde est un polymère de propylènoxyde.

6. Le composé d'azométhine selon la revendication 2 dans lequel le polymère d'alkylènoxyde est un copolymère d'éthylènoxyde et de propylènoxyde.

7. Le composé d'azométhine selon la revendication 6 dans lequel le copolymère répond à la formule: 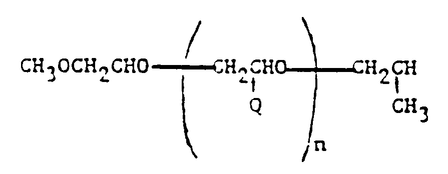 dans laquelle: n est un nombre entier d'environ 4 à environ 200 et Q est H ou CH₃

8. Le composé d'azométhine selon la revendication 7 dans lequel n est de l'ordre de 4 à 60.

9. Une composition de pigment comprenant un composé d'azométhine selon l'une quelconque des revendications 1 à 8 et au moins un pigment.

10. La composition de pigment selon la revendication 9 dans laquelle l'azométhine est présente dans une quantité n'excédant pas environ 50% en poids.

11. La composition de pigment selon la revendication 10 dans laquelle l'azométhine est présente dans une quantité de 5 à 30% en poids.

12. Une composition de pigment comprenant au moins un pigment de diarylide et un composé d'azométhine selon l'une quelconque des revendications 1 à 8 dans laquelle K est:

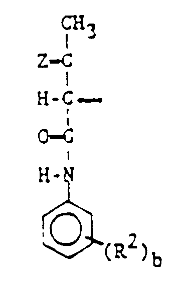

13. La composition de pigment selon la revendication 12 dans laquelle le pigment de diarylide est choisi parmi le pigment Yellow 12, le pigment Yellow 13, le pigment Yellow 14, le pigment Yellow 17, le pigment Yellow 83, le pigment Yellow 114, le pigment Yellow 126, le pigment Yellow 127, le pigment Yellow 176 et le pigment Orange 16.

14. Une composition d'encre d'impression comprenant la composition de pigment selon la revendication 12 et un véhicule.

15. Une composition de pigment comprenant au moins un pigment de disazopyrazolone et un composé d'azométhine selon l'une quelconque des revendications 1 à 8 dans laquelle K est:

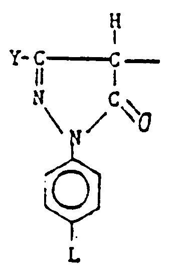

16. La composition de pigment selon la revendication 15 dans laquelle le pigment de disazopyrazolone est choisi parmi le pigment Orange 13, le pigment Orange 34, le pigment Red 37, le pigment Red 38, le pigment Red 41 et le pigment Red 42.

17. Composition d'encre d'impression comprenant la composition de pigment selon la revendication 15 et un véhicule.
